# EUROPÄISCHE PATENTSCHRIFT

(11) **EP 2 066 172 B1**
(45) Veröffentlichungstag und Bekanntmachung des Hinweises auf die Patenterteilung: **15.08.2012**
(21) Anmeldenummer: 06792051.2
(22) Anmeldetag: 14.09.2006
(51) Int. Cl.: A01N 25/04, A01N 25/22, A01N 25/30, A01N 43/12, A01N 43/707, A01N 47/22, A01P 13/00

(54) **HERBIZIDMISCHUNGEN MIT VERBESSERTER WIRKUNG, STABILITÄT UND AUSGIESSBARKEIT ZUR ANWENDUNG IN BETA-RÜBEN-KULTUREN**
HERBICIDE MIXTURES WITH IMPROVED ACTIVITY, STABILITY AND POURABILITY FOR USE IN BETA-BEET CROPS
MÉLANGES HERBICIDES À EFFET, STABILITÉ ET FACULTÉ DE DÉVERSEMENT AMÉLIORÉS POUR L'UTILISATION DANS DES CULTURES DE BETTERAVES

(43) Veröffentlichungstag der Anmeldung: 10.06.2009
(73) Patentinhaber: CERA CHEM S.A.R.L., 6684 Mertert (LU)
(72) Erfinder: MÜLLER, Jacki, 50374 Erftstadt (DE)
(74) Vertreter: Flaccus, Rolf-Dieter
(86) Internationale Anmeldenummer: PCT/EP2006/008933
(87) Internationale Veröffentlichungsnummer: WO 2008/031445

(56) Entgegenhaltungen:
- EP-A1- 0 327 176
- EP-A1- 0 388 239
- EP-A1- 0 465 899
- WO-A-87/05778
- DE-A1- 2 651 046
- DE-A1- 4 329 974

## Beschreibung

Die vorliegende Erfindung betrifft herbizidhaltige Suspensionskonzentrate mit verbesserter Wirkung, Stabilität und besseren Auslaufeigenschaften sowie Verfahren zu ihrer Herstellung und ihre Verwendung.

Untersuchungen in Beta-Rüben-Kulturen, zu denen die Rote Rübe (Futterrübe), die Zuckerrübe und auch Mangold zählen, haben ergeben, daß der maximale Ertrag pro Hektar durch Unkräuter stark negativ beeinflußt werden kann. So sinkt bereits bei nur acht Hundspetersilie-Pflanzen pro Quadratmeter der Ertrag bei Zuckerrüben im Vergleich zur unkrautfreien Kontrolle von 640 dt/ha um etwa 100 dt/ha. Bei Futterrüben konnte ein vergleichbarer Ertragsabfall durch Hundspetersilie beobachtet werden. Hinzu kommt, daß die verholzenden Stengel der Hundspetersilie die Rübenernte beträchtlich erschweren, wodurch ein erhöhter Arbeitsanfall und somit eine verteuerte Produktion die Folge ist.

Darüber hinaus ist im Zuckerrübenanbau (Ausfall-)Raps ein gefährlicher, schwer zu kontrollierender Konkurrent um Raum, Licht, Wasser und Nährstoffe, der auch das Rübenzystenälchen übertragen kann.

Eine weitere unerwünschte Pflanze im Kulturanbau ist Amarant, dessen verzweigtes Wurzelsystem ihn zu einem starken Wettbewerber um Wasser und Nährstoffe macht. Der hohe Wuchs bewirkt zusätzlich eine starke Lichtkonkurrenz, so daß insbesondere der Beschattungseffekt durch den Amarant für beträchtliche Ertragseinbußen verantwortlich ist.

Zur Bekämpfung der zuvor genannten Unkräuter sind herbizidhaltige Suspensionen auf Wasserbasis mit Mischungen der Wirkstoffe Desmedipham, Phenmedipham, Ethofumesat und gegebenenfalls Metamitron aus der DE 43 29 974 bekannt.
Ein Nachteil dieser Präparate ist deren beschränkte Lagerstabilität, die maximal einen Zeitraum von bis zu 2 Jahren für die Verarbeitung bietet, der in der Regel aber deutlich kürzer ist. Hinzu kommt, daß sich oft bereits gegen Ende der Lagerzeit ein beträchtlicher Anteil der Wirkstoffe als Sediment abgesetzt hat, so daß nicht nur die Wirksamkeit der Herbizidsuspension nachläßt, sondern auch die Leergebinde größere Restmengen der abgesetzten herbiziden Wirkstoffe enthalten, die ein Recycling der Behälter nicht mehr erlauben und eine aufwendige Entsorgung erforderlich machen.

Weiterhin ist die Wirksamkeit der in der DE 43 29 974 beschriebenen wäßrigen Suspensionen gegen die genannten Problemunkräuter wie Hundspetersilie and Amarant nicht ausreichend.

Die Herbizidzubereitungen der WO 92/09195 enthalten ebenfalls die bereits oben erwähnten Wirkstoffe und Wirkstoffkombinationen. Die ölbasierten Zubereitungen weisen in der Praxis aber die gleichen Defizite auf, wie die in der DE 43 29 974 beschriebenen wäßrigen Zubereitungen, wobei sie darüber hinaus nicht unproblematisch in ihrer Herstellung sind und phytotoxische Wirkungen auf die Nutzkultur zeigen.

Die DE 101 04 915 offenbart mit Naphtalinsulfonat-Formaldehyd-Kondensat stabilisierte Metamitronauspensionen, die einen Ölgehalt von 15 g/l bis 200 g/l aufweisen.
Es werden aber keine Mischungen mit anderen, in Rübenkulturen angewendeten Wirkstoffen beschrieben, so daß diese Zubereitungen nur ein geringes Wirkungsspektrum gegenüber den zu bekämpfenden Unkräutern aufweisen.

Aus EP 0 327 176 A1 sind lagerfähige wäßrige Dispersionen biologisch aktiver Carbamate sowie Herbizidkonzentrate bekannt, die ein Polyvinylpyrrolidon zur Verhinderung des Teilchenwachstums bei der Lagerung enthalten.

In EP 0 388 239 A1 werden Suspensionen beschrieben, die ein oberflächenaktives Mittel enthalten, in denen im wesentlichen wasserunlösliche Wirkstoffe in einem Gewichtsverhältsie von oberflächenaktiven Mittel zu Wirkstoff < 20:1 suspendiert sind.

Dokument DE 26 51 046 A1 beschreibt wäßrige Suspensionen schlecht wasserlöslicher Benzofuranberbizide, die ein oberflächenaktives Mittel umfassen.

Aus WO 87 05778 sind wässrige biscarbamathaltige Herbizidformulierungen bekannt, die neben dem Wirkstoff bis zu 60 % eines Pflanzenöls und bis zu 40 % eines oberflächenaktiven Mittels enthalten.

Ein großes Problem bei der Lagerung von herbiziden Suspensionskonzentraten ist das sogenannte "Caking", worunter das Verbacken von sedimentierten Wirkstoffpartikeln verstanden wird, die anschließend nicht mehr oder nur noch schwer in Suspension gebracht werden können und als Rückstand im Gebinde verbleiben. Dieser Effekt ist unter anderem durch die hohe Viskosität der Suspensionen bedingt, so daß der Verbleib einer Restmenge von Wirkstoffen nahezu unvermeidlich ist und durch das Verbacken noch vergrößert wird. Weiterhin tritt das Absetzen und Verbacken der Wirkstoffe verstärkt mit einer zunehmenden Dichte der vermahlenen Wirkstoffen auf, so z.B. bei Ethofumesat, das eine Dichte von 1,3 kg/l besitzt.

Da diese herbiziden Verbindungen in der Regel auch ein hohes toxisches Potential aufweisen, können Leergebinde mit einer Restmenge nicht einfach entsorgt werden, sondern werden zu Sonderabfällen.

Wie dargelegt, weisen die herbizidhaltigen Zubereitungen nach dem Stand der Technik eine unzureichende Stabilität bei ihrer Lagerung und/oder eine nicht ausreichende Wirksamkeit gegenüber bestimmten Unkräutern auf.

Die Aufgabe der vorliegenden Erfindung war es daher, die chemisch-physikalischen Eigenschaften der Suspensionen, insbesondere ihre Stabilität und Auslaufeigenschaften, zu verbessern.

Weiterhin bestand die Aufgabe darin auch die Wirksamkeit und das Wirkungsspektrum der bekannten, in den Zubereitungen verwendeten herbiziden Wirkstoffe zu verbessern und so wirksamere Pflanzenschutzmittel bereitzustellen, welche über einen langen Zeitraum lagerfähig sind und deren Leergebinde frei von Kontaminationen sind, d.h. insbesondere frei sind von sedimentierten Herbizidrückständen.

Die Aufgabe wird mit der vorliegenden Erfindung dadurch gelöst, daß die erfindungsgemäßen Suspensionen mindestens ein Herbizid und mindestens ein Lanolin, Wollwachsalkohol und/oder Polyoxyethylen-Derivat (POE-Derivat) von Lanolin oder Wollwachsalkoholen enthalten, wobei im folgenden unter Lanolin-Derivaten die Gruppe der zuvor definierten Verbindungen zu verstehen ist. Zu den erfindungsgemäß verwendeten Lanolin-Derivaten zählen unter anderem auch Fluilan (Lanolin A), Solan E (POE-75 Wollwachs / Lanolin B) und der Wollwachsalkohol Hartolan.

Die in der vorliegenden Erfindung eingesetzten LanolinDerivate können sowohl feste, wachsartige als auch flüssige Derivate sein.

Die genannten Lanolin-Derivate sind bisher überwiegend in der Pharmazie und Kosmetik zur Creme- und Salbenzubereitung aufgrund ihrer hautpflegenden Eigenschaften zum Einsatz gekommen. In der Landwirtschaft ist auch ihre Verwendung zur Beschichtung von Saatgut bekannt.

Überraschenderweise hat sich gezeigt, daß die Zugabe von mindestens einem Lanolin-Derivat zu Herbizidsuspensionen nicht nur die physikalischen Eigenschaften der Suspensionen, sondern auch die Wirksamkeit der in ihnen enthaltenen Herbizide deutlich erhöht.

Suspensionskonzentrate mit Lanolin-Derivaten zeigen sowohl eine erhöhte Lagerstabilität als auch verbesserte Auslaufeigenschaften. Darüber hinaus konnte auch eine verbesserte und erweiterte Wirkung gegen Problemunkräuter wie z.B. Hundspetersilie (*Aethusa cynapium* L.), Amarant (*Amaranthus retroflexus* L.) und (Ausfall-) Raps (*Brassica napus* L.) gezeigt werden.

Die erfindungsgemäßen Suspensionen enthalten mindestens einen herbiziden Wirkstoff (Herbizid), der aus der Gruppe ausgewählt ist, die die Harnstoffderivate, Carbamate, Biscarbamate, Triazine, Triazinone und Benzofuranderivate umfaßt.

In einer weiteren Ausführungsform enthalten die Suspensionen Mischungen eines Wirkstoffs aus der zuvor genannten Gruppe mit einem oder mehreren herbiziden Wirkstoffen aus der Gruppe der Acetamide, Aminophosphorsäuren, Anilide, Anilinderivate, aromatischen Nitroverbindungen, aromatischen Nitrile, Benzamide, Benzoesäurederivate, Benzofuranderivate, Bipyridylium-Kationen, Carbamate, Biscarbamate, Carbonsäuren, Chinoxalinderivate, Chlorkohlenwasserstoffe, Cyanamide, Diazolderivate, Flurencarbonsäurederivate, Harnstoffderivate, Isoxazolidine, Nitrophenylderivate, organische Phosphorverbindungen, Oximderivate, Phenoxycarbonsäuren, Phenylamide, Phosphorsäureester, Phthalsäurederivate, Propionamide, Pyrazolderivate, Pyridazine, Pyridin (-derivate), Pyridyloxyessigsäuren, Pyrimidin (-derivate), Pyrrolidone, Quinolincarboxyle, Quinolinderivate, Sulfonamide, Thiadiazine, Thiocarbamate, Triazin (-derivate), Triazinonderivate, Triazol (-derivate) und Uracilderivate.

Besonders bevorzugt sind die herbiziden Wirkstoffe ausgewählt aus der Gruppe, die Desmedipham (DMP), Phenmedipham (PMP), Metamitron und Ethofumesat umfaßt.

In einer Ausführungsform werden Mischungen dieser Herbizide verwendet, wobei die Mischungen bevorzugt Wirkstoffe aus unterschiedlichen Wirkstoffgruppen mit unterschiedlichen Wirkmechanismen enthalten, so daß eine maximale Wirkung bei einem breiten Wirkungsspektrum erzielt wird.

Bevorzugt sind in den Suspensionen bis zu fünf, weiter bevorzugt bis zu drei, und besonders bevorzugt zwei, herbizide Wirkstoffe in einer Gesamtkonzentration von 150 g/l bis zu 700 g/l, bevorzugt von 300 g/l bis 600 g/l, enthalten.

In einer bevorzugten Ausführungsform liegt das Verhältnis von DMP zu PMP in dem Suspensionskonzentrat im Bereich von etwa 1:5 bis 5:1, bevorzugt von etwa 1:3 bis 3:1, und besonders bevorzugt im Bereich von etwa 1:1,2 bis 1,2:1, bezogen auf das Gewicht der Wirkstoffe.

In einer weiteren bevorzugten Ausführungsform, die neben anderen Herbiziden Metamitron enthält, liegt das Verhältnis von Metamitron zu den anderen in der Suspension enthaltenen Herbiziden etwa 5:1, bevorzugt etwa 4:1, und besonders bevorzugt etwa 3:1, bezogen auf das Gewicht der Wirkstoffe. In einer weiteren Ausführungsform liegen die anderen Herbizide in etwa zu gleichen Teilen vor bezogen auf das Gewicht der Wirkstoffe.

In einer anderen bevorzugten Ausführungsform enthält das erfindungsgemäße Suspensionskonzentrat Ethofumesat, Phenmedipham und Desmedipham, wobei die Wirkstoffe in einem Verhältnis von 3:2:1 bis 6:1:0,25, bevorzugt von etwa 4:2:1, Ethofumesat zu Phenmedipham zu Desmedipham bezogen auf das Gewicht der Herbizide vorliegen.

Der Anteil der Lanolin-Derivate in der Suspension beträgt zwischen 1 g/l und 20 g/l, bevorzugt zwischen 3 g/l und 15 g/l, und besonders bevorzugt zwischen 5 g/l und 10 g/l, wobei bevorzugt bis zu vier, weiter bevorzugt bis zu drei, und besonders bevorzugt bis zu zwei, Lanolinderivate in der Suspension enthalten sind.

In einer Ausführungsform enthalten die Suspensionskonzentrate weiterhin mindestens ein natürliches oder synthetisches Öl oder deren Derivate, wobei die natürlichen Öle und ihre Derivate aus der Gruppe ausgewählt sind, die Mineralöle und pflanzliche Öle sowie ihre Derivate umfaßt. Besonders bevorzugt sind Rapsölmethylester oder Butyloleat.

Der Anteil der Öle in der Suspension liegt zwischen 1 g/l und 20 g/l, bevorzugt zwischen 2 g/l und 10 g/l, und besonders bevorzugt zwischen 3 g/l und 8 g/l.

Eine weitere Ausführungsform sieht vor, daß die Suspension neben einem Herbizid einen Wirkstoff einer anderen Gruppe der Pflanzenschutzmittel enthält, beispielsweise ein Fungizid oder ein Insektizid.

Weiterhin enthalten bevorzugte Ausführungsformen der erfindungsgemäßen Suspensionen zusätzlich mindestens ein handelsübliches Tensid. Die Gesamtkonzentration der Tenside in der Suspension beträgt von 5 g/l bis 100 g/l, bevorzugt von 10 g/l bis 50 g/l, und besonders bevorzugt 30 g/l.

Die Tenside sind ausgewählt aus der Gruppe, die anionische, kationische und nicht-ionische Tenside, insbesondere alkoxylierte Blockcopolymere, ethoxylierte C₈ bis C₁₄ Alkohole (Alkylethoxylate), Alkylarylethoxylate, Alkylethersulfate, Alkylsulfonate und Alkylarylsulfonate, oder Mischungen dieser Tenside umfaßt.

Beispiele für verwendbare Tenside sind Tensiofix-Tenside, insbesondere Tensiofix DB08DL, und die an sich bekannten Tenside Volpo T/785, Volpo T/10, Genapol LRO, Emulsogen, Pluronic-Typen.

Neben diesen Bestandteilen kann die erfindungsgemäße Suspension in weiteren Ausführungsformen noch an sich bekannte Hilfs- und/oder Trägerstoffe enthalten, die üblicherweise bei Suspensionskonzentraten eingesetzt werden.

Beispielhaft genannt seien Frostschutzmittel, Stabilisatoren, Entschäumer und Thixotropier- und Dispergiermittel sowie gegebenenfalls weitere Füllstoffe.

Das Dispergiermittel kann beispielsweise ausgewählt sein aus den Gruppen der phosphatierten Di- oder Tristyrolphenolethoxylate in der Phosphatform und/oder der Ligninsulfonate. Vorzugsweise werden ethoxylierte Tristyrolphenolphosphate, Natrium-, Kalium-, Calcium-, Magnesium-, Zink- oder Ammoniumligninsulfonate, insbesondere Ligninsulfonat-Calcium-Magnesium-Zink-Mischsalze, alkoxylierte Blockcopolymere, beispielsweise alpha-(p-nonylphenyl-omegahydroxy-poly(oxypropylen)-blockpolymer), oder Mischungen dieser Mittel eingesetzt. Besonders bevorzugt sind Tensiofix LX Spezial, Tensiofix SC, Soprophor FL oder Soprophor FL 60 sowie Mischungen dieser Mittel.

Als Stabilisatoren werden bevorzugt wasserlösliche organische Säuren, zum Beispiel Zitronensäure, und saure anorganische Salze, zum Beispiel Ammoniumchlorid, verwendet.

Als Frostschutzmittel werden neben anderen bekannten Frostschutzmitteln Glykole verwendet, wobei Propylen-, Diethylen- oder Monoethylenglycol bevorzugt sind.

Als Thixotropiermittel und Füllstoff kommen beispielsweise Kieselsäuren in Betracht.

Die Erweiterung des Wirkungsspektrums von herbiziden Wirkstoffen auf andere Unkräuter bei gleichzeitiger verbesserter Wirkung unter Verwendung einer mit Lanolin-Derivaten - formulierten Suspension ist aus dem Stand der Technik her nicht zu erwarten gewesen. Dasselbe gilt für die verbesserte Lagerstabilität der Suspensionen und das verbesserte Ausgießverhalten.

Die erfindungsgemäßen Suspensionskonzentrate bieten dabei weiterhin den Vorteig, daß sie als Suspensionen auf wäßriger Basis keine toxikologisch bedenklichen Losungsmittel wie Chloroform, Dichlormethan oder dergleichen enthalten, wodurch aufgrund der fehlende Brennbarkeit Lagerung und Anwendung der erfindungsgemäßen Pflanzenschutzmittel vereinfach werden und gleichzeitig eine unerwünschte Toxizität infolge der Losungsmittel vermieden wird.

Die erfindungsgemäßen Pflanzenschutzmittel werden nach an sich bekannten Verfahren hergestellt, vorzugsweise des Naßzezmahlungsprinzips. Dazu werden die einzelnen Komponenten (Wirkstoffe und Hilfsstoffe) mit einer entsprechenden Menge Wasser in einer geeigneten Vorrichtung, zum Beispiel einer Perlmühle, fein vermahlen wobei die Komponenten dabei auf einen Feinheitsgrad von 0,5 bis 20 µm, insbesondere auf einen Feinheitsgrad von < 10 µm eingestellte werden.

Weiterhin ist die Erfindung auf die Verwendung der erfindungsgemäßen suspensionakonzentrate als Pflanzenachutzmittel, insbesondere zum Einsatz in Beta-Rüben-Kulturen gegen Hundspetersilie, Amarant und Ausfallraps gerichtet.

Die erfindungsgemäßen Pflanzenschutzmittel zeigen in der Formulierungs-/ Erscheinungsform eines Suspensionskonzentrates neben den toxikologischen und ökotoxikologischen Vorteilen überraschenderweise ein zusätzlich gesteigertes biologisches Potential in der Bekämpfung von Unkräutern, die mit bekannten Präparationen in äquivalenter Aufwandmenge bisher nicht bekämpft werden konnten.

Die oben erwähnten und nachfolgenden Ausführungsformen und Vorteile der Erfindung werden anhand der folgenden Beispiele näher erläutert.

Besonders bevorzugte Ausführungsformen der erfindungsgemäßen herbiziden Suspensionskonzentrationen haben folgende Zusammensetzungen:

### Beispiel I:

### Suspensionskonzentrat I :

| Inhaltstoff | Menge [g/l] |
|---|---|
| Desmedipham | 150 |
| Phenmedipham | 150 |
| Soprophor FL 60 | 25 |
| Lanolin B | 5 |
| Kieselgel SM 614 | 5 |
| Rapsölmethylester | 3 |
| Frostschutzmittel | 35 |
| Stabilisator | 1,5 |
| Entschäumer | 5 |
| Wasser | ad 1 l |

### Beispiel 2:

### Suspensionskonzentrat II:

| Inhaltstoff | Menge [g/l] |
|---|---|
| Desmedipham | 300 |
| Soprophor FL | 28 |
| Lanolin A | 10 |
| Rapsölmethylester | 4 |
| Tensiofix LX Spezial | 3 |
| Tixosil 38 A | 5 |
| Frostschutzmittel | 40 |
| Stabilisator | 1,0 |
| Entschäumer | 5 |
| Wasser | ad 1 l |

### Beispiel 3:

### Suspensionskonzentrat III:

| Inhaltstoff | Menge [g/l] |
|---|---|
| Desmedipham | 240 |
| Soprophor FL | 45 |
| Lanolin A | 8 |
| BO | 5,5 |
| Tensiofix LX Spezial | 5 |
| Kieselgel SM 614 | 3 |
| Frostschutzmittel | 35 |
| Stabilisator | 1,0 |
| Entschäumer | 8 |
| Wasser | ad 1 l |

### Beispiel 4:

### Suspensionskonzentrat IV:

| Inhaltstoff | Menge [g/l] |
|---|---|
| Metamitron | 600 |
| Tensiofix SC | 8 |
| Tensiofix DB08DL | 30 |
| Lanolin B | 5 |
| Kieselgel SM 614 | 4 |
| Frostschutzmittel | 38 |
| Entschäumer | 7 |
| Stabilisatoren | 1 |
| Wasser | ad 1 l |

| | |
|---|---|
| BO = Butyloleat, Lanolin A = Fluilan, Lanolin B = Solan E | |

Die den folgenden Tabellen zugrundeliegenden Versuche wurden in Gewächshäusern durchgeführt.

Tabelle 1 zeigt einen Vergleich der Wirksamkeit einer Mischung handelsüblicher herbizider Suspensionskonzentrate (SC) mit einem erfindungsgemäßen Pflanzenschutzmittel in Form eines Suspensionskonzentrates (erfindungsgemäßes SC). Die Mittel wurden hinsichtlich ihrer Wirksamkeit gegen Hundspetersilie, Amarant und Raps getestet.

**Tab. 1:**

| Zubereitung | Wirkstoffe | Aufwandmenge [l/ha] | | Wirksamkeit [%] | |
|---|---|---|---|---|---|
| | [g/l] | | Aethusa* | Amarant** | Brassica*** |
| standard SC | 200 +200 Etho + PMP | 1 | | | |
| | | 1,5 | | | |
| | | 1,5 | | | |
| standard SC | 700 Meta | 1 | 0 | 10 | 0 |
| | | 2 | 20 | 25 | 30 |
| | | 2 | 50 | 60 | 60 |
| Summe der ausgebrachten Wirkstoffe: | 800 + 800 + 3500 Etho + PMP + Meta | | mittlere Wirksamkeit[%]: | | |
| | | | | | 28 |
| erfindungsgemäßes SC | 100 + 90 + 500 Etho + PMP + Meta | 2 | 10 | 15 | 15 |
| | | 2 | 40 | 45 | 50 |
| | | 2 | 70 | 80 | 80 |
| Summe der ausgebrachten Wirkstoffe: | 600 +540 + 3000 Etho + PMP + Meta | | mittlere Wirksamkeit[%]: | | |
| | | | | | 45 |

| | | | | | |
|---|---|---|---|---|---|
| * *Aethus cynapium L.* (Hundspetersilie) ** *Amaranthus retroflexus L.* (Rauhaariger Amarant) *** *Brassica napus* (Raps) Etho = Ethofumesat; Meta = Metamitron; PMP = Phenmedipham | | | | | |

Aus den Daten in Tabelle 1 geht klar hervor, daß das erfindungsgemäße Suspensionskonzentrat bei einer um ca. 20 % verringerten Aufwandsmenge pro Hektar eine um 60 % gesteigerte Wirksamkeit gegen Hundpetersilie, Amarant und Raps aufweist. Durch diese verbesserte Wirksamkeit können nicht nur Kosten im Pflanzenschutz eingespart, sondern auch die Umwelt geschont werden.

Aus dem Vergleich der Wirksamkeit gegenüber den drei getesteten Spezies, die bei den erfindungsgemäßen Zubereitungen deutlich gestiegen ist, zeigt sich, daß nicht nur die Wirksamkeit, sondern auch das Wirkungsspektrum der Herbizide in den Zubereitungen vergrößert wurde.

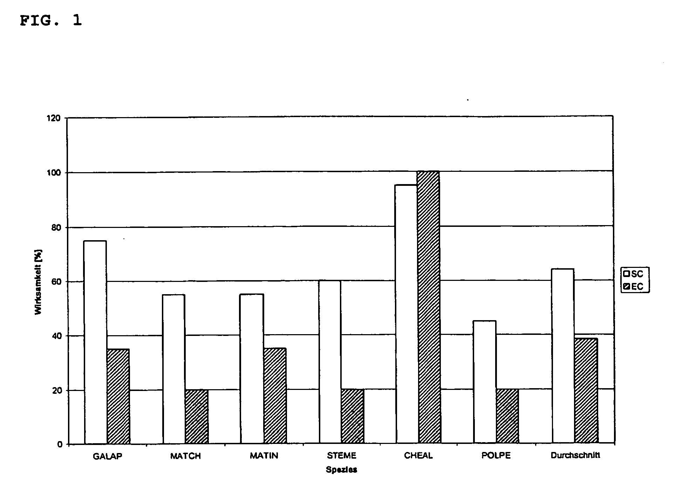

Tabelle 2 zeigt einen Vergleich der Wirksamkeit eines erfindungsgemäßen Suspensionskonzentrates (SC) gegenüber einem handelsüblichen Emulsionskonzentrat (Betanal® Expert). Die graphische Auswertung der entsprechenden Daten ist in Figur 1 zu dargestellt.

Verglichen wurde hier ein erfindungsgemäßes Pflanzenschutzmittel (Suspensionskonzentrat SC), das 140 g/l Ethofumesat, 70 g/l PMP und 20 g/l DMP als Wirkstoffe enthielt, mit einem im Stand der Technik bekannten Pflanzenschutzmittel (Betanal^{®} Expert), das 151 g/l Ethofumesat, 75 g/l PMP und 25 g/l DMP als Wirkstoffe enthielt. Betanal® Expert wurde in einer Aufwandmenge von 3 x 1,75 1/ha ausgebracht, "die' erfindungsgemäße Suspensionskonzentration hingegen nur in 75 % dieser vorgesehenen Aufwandsmenge.

**Tab. 2:**

| Vergleich der Wirksamkeit einer erfindungsgemäßen Suspension zu einer Handelsüblichen Emulsionskonzentration bei 75 % der vorgesehen Aufwandsmenge | | | | | | | |
|---|---|---|---|---|---|---|---|
| | Wirksamkeit [%] / Spezies | | | | | | |
| Typ | GALAP | MATCH | MATIN | STEME | CHEAL | POLPE | Durchschnitt |
| SC | 75 | 55 | 55 | 60 | 95 | 45 | 64 |
| EC | 35 | 20 | 35 | 20 | 100 | 20 | 38 |

| | | | | | | | |
|---|---|---|---|---|---|---|---|
| GALAP: *Galium aparine* MATCH: *Matricaria chamonilla* MATIN: *Matricaria inodora* STEME: *Stellaria media* CHEAL: *Chenopodiumalbum* POLPE: *Polygorium persicara* | | | | | | | |

Wie aus Tabelle 2 und der korrespondierenden Figur 1 ersichtlich ist, zeigen die Suspensionskonzentrate der vorliegenden Erfindung bei einer um 25 % verringerten Aufwandmenge eine deutlich höhere Wirksamkeit gegenüber verschiedenen Unkräutern.

Tabelle 3 zwei zeigt einen Vergleich der Wirksamkeit zugelassener Emulsionskonzentrate und Suspensionskonzentrate mit verschiedenen Herbiziden gegenüber erfindungsgemäßen Suspensionskonzentraten bei vergleichbarer oder geringerer Aufwandsmenge der Herbizide in den erfindungsgemäßen Zubereitungen.

Tab. 3: Vergleich von zugelassenen Emulsionskonzentraten und Suspensionskonzentraten mit erfindungsgemäßen Suspensionskonzentraten.

**Tab. 3:**

| Zubereitung | Wirkstoffe [g/l] | Aufwandmenge [l/ha] | Wirksamkeit in [%] gegen: Ø* 6 Spezies | Wirksamkeit in [%] gegen: Matin** | Wirksamkeit in [%] gegen: Match*** |
|---|---|---|---|---|---|
| Betanal^{®} | 80 + 80 | 1 | 24 | 5 | 5 |
| AM 11 | DMP +PMP | 2 | 51 | 55 | 20 |
| | | 4 | 80 | 80 | 75 |
| Suspensionskonzentrat I | 150 + 150 | 0,5 | 45 | 60 | 50 |
| | DMP+PMP | 1 | 75 | 90 | 85 |
| | | 2 | 90 | 90 | 85 |
| standard SC | 700 Metamitron | 1 | 25 | 10 | 20 |
| | | 2, 5 | 40 | 40 | 30 |
| | | 5 | 50 | 30 | 50 |
| Suspensionskonzentrat IV | 600 Metamitron | 0,5 | 40 | 50 | 70 |
| | | 0,75 | 55 | 60 | 70 |
| | | 1 | 75 | 80 | 80 |

| | | | | | |
|---|---|---|---|---|---|
| * *Galium aparine, Matricaria chamonilla, Matricaria inodora, Stellaria media,Chenopodiumalbum und Polygonum persicara* ** *Matricaria inodora* *** *Matricaria chamonilla* | | | | | |

Wie sich aus Tabelle 3 deutlich entnehmen läßt, weisen die erfindungsgemäßen Suspensionskonzentrate sowohl bei Verwendung einer Herbizidmischung aus DMP/PMP im Verhältnis von 1:1 als auch bei Verwendung von Metamitron eine deutlich verbesserte Wirksamkeit bei verringerter Aufwandmenge auf. Aus dem Vergleich der durchschnittlichen Wirksamkeit gegenüber den sechs repräsentativ getesteten Spezies, die bei den erfindungsgemäßen Zubereitungen deutlich gestiegen ist, zeigt sich, daß nicht nur die Wirksamkeit, sondern auch das Wirkungsspektrum der Herbizide in den Zubereitungen vergrößert wurde.

Bei Verwendung der erfindungsgemäßen Pflanzenschutzmittel kann somit trotz verringerter Aufwandsmenge eine bessere Wirksamkeit und ein verbessertes Wirkspektrum erzielt werden. Hieraus resultiert nicht nur ein finanzieller Vorteil, sondern auch eine deutlich geringere Belastung der Umwelt durch Herbizide. Hinzu kommt, daß die Suspensionen ein verbessertes Ausgießverhalten zeigen, so daß die Restentleerung der Behälter verbessert und die Ausbeute an eingesetztem Wirkstoff optimiert wird.

## Patentansprüche

1. In wäßrige Suspension vorliegendes herbizides Pflanzenschutzmittel, **dadurch gekennzeichnet, daß** es mindestens ein Herbizid aus den Gruppen der Harnstoffderivate, der Carbamate, Biscarbamate, Triazine, Triazinone oder Benzofuranderivate und mindestens ein Lanolin und/oder Wollwachsalkohol und/oder Polyoxyethylen-Derivat von Lanolin oder Wollwachsalkoholen enthält.

2. Pflanzenschutzmittel nach Anspruch 1, **dadurch gekennzeichnet, daß** es mindestens ein natürliches oder synthetisches Öl oder dessen Derivate enthält .

3. Pflanzenschutzmittel nach einem der vorhergehenden Ansprüche, **dadurch gekennzeichnet, daß** es zusätzlich mindestens ein Tensid enthält.

4. Pflanzenschutzmittel nach einem der vorhergehenden Ansprüche, **dadurch gekennzeichnet, daß** das Tensid aus der Gruppe ausgewählt ist, die anionische, kationische und nicht-ionische Tenside oder Mischungen dieser Tenside umfaßt.

5. Pflanzenschutzmittel nach einem der vorhergehenden Ansprüche, **dadurch gekennzeichnet, daß** das Herbizide ausgewählt ist aus der Gruppe, die Phenmedipham, Desmedipham, Metamitron und Ethofumesat sowie Mischungen dieser Wirkstoffe umfaßt.

6. Pflanzenschutzmittel nach einem der vorhergehenden Ansprüche, **dadurch gekennzeichnet, daß** es mindestens zwei Herbizide unterschiedlicher Wirkstoffklassen mit unterschiedlichen Wirkmechanismen enthält.

7. Pflanzenschutzmittel nach einem der vorhergehenden Ansprüche, **dadurch gekennzeichnet, daß** es zusätzlich Hilfsund/oder Trägerstoffe enthält, die aus der Gruppe ausgewählt sind, die Frostschutzmittel, Stabilisatoren, Entschäumer und Dispergiermittel umfaßt.

8. Pflanzenschutzmittel nach einem der vorhergehenden Ansprüche, **dadurch gekennzeichnet, daß** das Dispergiermittel aus der Gruppe ausgewählt ist, die phosphatierte Di- oder Tristyrole und Ligninsulfonate oder Mischungen dieser Mittel umfaßt.

9. Verfahren zur Herstellung eines Pflanzenschutzmittels gemäß einem der Ansprüche 1 bis 8, **dadurch gekennzeichnet, daß** die Komponenten in einer geeigneten Vorrichtung mit Wasser gemischt werden und fein gemahlen werden, wobei die Komponenten dabei auf einen Feinheitsgrad von 0,5 bis 20 µm eingestellt werden.

10. Verfahren zur Herstellung eines Pflanzenschutzmittels gemäß Anspruch 9, **dadurch gekennzeichnet, daß** die Komponenten auf einen Feinheitsgrad <10 µm eingestellt werden.

11. Verwendung eines Pflanzenschutzmittels nach einem der Ansprüche 1 bis 8 zur Unkrautbekämpfung in Beta-Rüben-Kulturen.

12. Verwendung eines Pflanzenschutzmittels gemäß Anspruch 11, wobei die Unkräuter ausgewählt werden aus der Gruppe bestehend aus Amarant, Raps und Hundspetersilie.

## Claims

1. Herbicidal plant protectant, present in aqueous suspension, **characterised in that** it comprises at least one herbicide from the groups of the urea derivatives, the carbamates, biscarbamates, triazines, triazinones or benzofuran derivatives and at least one lanolin and/or wool wax alcohol and/or polyoxyethylene derivative of lanolin or wool wax alcohols.

2. Plant protectant according to claim 1, **characterised in that** it comprises at least one natural or synthetic oil or derivatives thereof.

3. Plant protectant according to any one of the preceding claims, **characterised in that** it additionally contains at least one surface-active agent.

4. Plant protectant according to any one of the preceding claims, **characterised in that** the surface-active agent is selected from the group comprising anionic, cationic and non-ionic surface-active agents or mixtures of said surface-active agents.

5. Plant protectant according to any one of the preceding claims, **characterised in that** the herbicide is selected from the group comprising phenmedipham, desmedipham, metamitron and ethofumesate as well as mixtures of these active ingredients.

6. Plant protectant according to any one of the preceding claims, **characterised in that** it comprises at least two herbicides belonging to different active ingredient classes with different mechanisms of action.

7. Plant protectant according to any one of the preceding claims, **characterised in that** it additionally comprises auxiliary agents and/or carriers selected from the group comprising antifreeze agents, stabilizers, antifoaming agents and dispersing agents.

8. Plant protectant according to any one of the preceding claims, **characterised in that** the dispersing agent is selected from the group comprising phosphatised distyrenes or tristyrenes and lignin sulfonates, or mixtures of these agents.

9. Process for the preparation of a plant protectant according to any one of claims 1 to 8, **characterised in that** the components are mixed with water in a suitable device and are finely ground, the components in the process being adjusted to a degree of fineness of from 0.5 to 20 µm.

10. Process for the preparation of a plant protectant according to claim 9, **characterised in that** the components are adjusted to a degree of fineness of <10 µm.

11. Use of a plant protectant according to any one of claims 1 to 8, for weed control in beta-beet crops.

12. Use of a plant protectant according to claim 11, the weeds being selected from the group consisting of amaranth, rape and fool's parsley.

## Revendications

1. Agent herbicide conférant une protection aux plantes présent dans une suspension aqueuse, **caractérisé en ce qu'**il contient au moins un herbicide choisi parmi les groupes des dérivés d'urée, des dérivés de carbamates, de biscarbamates, de triazines, de triazinones ou de benzofuranne, et au moins une lanoline et/ou un alcool de cire de laine et/ou un dérivé de polyoxyéthylène de lanoline ou d'alcools de cire de laine.

2. Agent conférant une protection aux plantes selon la revendication 1, **caractérisé en ce qu'**il contient au moins une huile naturelle ou synthétique ou ses dérivés.

3. Agent conférant une protection aux plantes selon l'une quelconque des revendications précédentes, **caractérisé en ce qu'**il contient en outre au moins un agent tensioactif.

4. Agent conférant une protection aux plantes selon l'une quelconque des revendications précédentes, **caractérisé en ce que** l'agent tensioactif est choisi parmi le groupe qui comprend des agents tensioactifs anioniques, cationiques et non ioniques ou encore des mélanges de ces agents tensioactifs.

5. Agent conférant une protection aux plantes selon l'une quelconque des revendications précédentes, **caractérisé en ce que** l'herbicide est choisi parmi le groupe qui comprend le phenmedipham, le desmedipham, le métamitron et l'éthofumésate, ainsi que des mélanges de ces substances actives.

6. Agent conférant une protection aux plantes selon l'une quelconque des revendications précédentes, **caractérisé en ce qu'**il contient au moins deux herbicides de classes de substances actives différentes possédant des mécanismes d'action différents.

7. Agent conférant une protection aux plantes selon l'une quelconque des revendications précédentes, **caractérisé en ce qu'**il contient en outre des substances auxiliaires et/ou des substances de support, qui sont choisies parmi le groupe qui comprend des agents de protection contre le gel, des stabilisateurs, des agents antimousse et des agents de mise en dispersion.

8. Agent conférant une protection aux plantes selon l'une quelconque des revendications précédentes, **caractérisé en ce que** l'agent de mise en dispersion est choisi parmi le groupe qui comprend des distyrènes ou des tristyrènes phosphatés et des sulfonates de lignine ou encore des mélanges de ces agents.

9. Procédé pour la préparation d'un agent conférant une protection aux plantes selon l'une quelconque des revendications 1 à 8, **caractérisé en ce qu'**on mélange les composants avec de l'eau dans un dispositif approprié et on broie finement le mélange, le degré de finesse des composants étant réglé en l'occurrence à une valeur de 0,5 à 20 µm.

10. Procédé pour la préparation d'un agent conférant une protection aux plantes selon la revendication 9, **caractérisé en ce qu'**on règle le degré de finesse des composants à une valeur inférieure à 10 µm.

11. Utilisation d'un agent conférant une protection aux plantes selon l'une quelconque des revendications 1 à 8, pour la lutte contre les mauvaises herbes dans des cultures de betteraves.

12. Utilisation d'un agent conférant une protection aux plantes selon la revendication 11, dans laquelle les mauvaises herbes sont choisies parmi le groupe constitué par l'amarante, le colza et le faux-persil.
